(19) Europäisches Patentamt
European Patent Office
Office européen des brevets

(11) Veröffentlichungsnummer: **0 538 597 A1**

# (12) EUROPÄISCHE PATENTANMELDUNG

(21) Anmeldenummer: **92114953.0**

(51) Int. Cl.[5]: **C08G 18/80**, C08G 18/79

(22) Anmeldetag: **02.09.92**

(30) Priorität: **15.10.91 DE 4134032**

(43) Veröffentlichungstag der Anmeldung: **28.04.93 Patentblatt 93/17**

(84) Benannte Vertragsstaaten: **AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Gras, Rainer, Dr.**
**Im Ostholz 49 a**
**W-4630 Bochum 5(DE)**
Erfinder: **Wolf, Elmar, Dr.**
**Stauffenbergstrasse 7**
**W-4350 Recklinghausen(DE)**

(54) **Blockierte höherfuntionelle Polyisocyanataddukte, ein Verfahren zu ihrer Herstellung sowie deren Verwendung.**

(57) Die Erfindung betrifft blockierte höherfunktionelle Polyisocyanataddukte mit einem Schmelzpunkt < 120 °C, bevorzugt 80 - 110 °C, welche dadurch gekennzeichnet sind, daß das blockierte Polyisocyanataddukt mit einer Funktionalität > 2 pro blockierte NCO-Gruppe 1,1-2 mol Blockierungsmittel enthält.

EP 0 538 597 A1

Die vorliegende Erfindung betrifft spezielle, mit ε-Caprolactam blockierte Diisocyanataddukte, insbesonders auf Isophorondiisocyanat-Basis (IPDI), ein Verfahren zu ihrer Herstellung sowie ihre Verwendung zur Herstellung von lichtbeständigen PUR-Pulvern.

Hitzehärtbare pulverförmige Massen, die man durch Reaktion eines hydroxylgruppenhaltigen Harzes mit einem maskierten Polyisocyanat erhält, gehören zum Stand der Technik und werden weit verbreitet angewandt. Die für hitzehärtbare pulverförmige Massen bevorzugten Isocyanate sind (cyclo)-aliphatische Polyisocyanate, und zwar wegen ihres ausgezeichneten Alterungsverhaltens im Vergleich zu den aromatischen Isocyanaten, welche insbesondere den Nachteil des Vergilbens beim Einbrennen und Altern aufweisen.

Es haben sich als PUR-Pulverhärter vor allem ε-Caprolactam blockierte Isocyanat-Polyol-Addukte auf Isophorondiisocyanat-Basis durchgesetzt. Der Grund hierfür liegt mit sehr großer Wahrscheinlichkeit in der stark unterschiedlichen Reaktivität der beiden NCO-Gruppen im IPDI, die eine gezielte Adduktbildung des IPDI mit dem Polyol ermöglichen (enge Molgewichtsverteilung). Eine enge Molgewichtsverteilung des Härters ist die Voraussetzung für einen guten Verlauf des ausgehärteten Pulvers. ε-Caprolactam blockiertes IPDI schmilzt bei 53-55 °C. Infolge der niedrigen Schmelztemperatur backen die aus diesem blockierten IPDI hergestellten PUR-Pulver beim Lagern zusammen. Zur Erhöhung des Schmelzpunktes wird IPDI vor der ε-Caprolactam-Blockierung einer Molgewichtserhöhung, z. B. durch Kettenverlängerung mit einem Polyol, oder durch partielle Trimerisierung und/oder Dimerisierung, unterworfen. In der DE-PS 21 05 777 werden als Kettenverlängerungsmittel für IPDI Polyole, wie Trimethylolpropan, 2.2.4(2.4.4)-Trimethyl-hexandiol-1.6,Diethylenglykol, in der DE-OS 25 42 191 Gemische aus di- und trifunktionellen Polyolen, in der US-PS 3 931 117 trifunktionelle Polyole, genannt. Die DE-OS 27 35 497 beschreibt die Verwendung von ε-Caprolactam blockierten, partiell trimerisiertem IPDI als PUR-Pulverhärter; partiell dimerisierte aliphatische Diisocyanate, speziell IPDI, deren freie NCO-Gruppen teilweise oder ganz mit ε-Caprolactam blockiert sind, werden ebenfalls als PUR-Pulverhärter beschrieben (DE-OS 24 20 475). In der DE-OS 31 43 060 werden PUR-Pulverhärter, die durch Kettenverlängerung des IPDI mit einem aliphatischen Diamin und anschließende ε-Caprolactam-Blockierung erhalten werden, beschrieben. Allen diesen PUR-Pulverhärtern gemeinsam ist ihre einfache Herstellung in einem Eintopf-Verfahren. Dieses Eintopf-Verfahren hat im technischen Maßstab seine Grenzen dann, wenn die Schmelzbereiche der blockierten Polyisocyanat-Addukte in der Nähe der Deblockierungstemperatur des Reaktionsproduktes liegen, da beim Entleeren des Reaktors mit einer partiellen Deblockierung der blockierten Polyisocyanat-Addukte gerechnet werden muß. Weiterhin ist bekannt, daß bei PUR-Pulvern die Chemikalienresistenz (bei einem Polyol) umso besser ist, je höher die Funktionalität des Härters ist. Dieser Zusammenhang des Einflusses der Funktionalität des blockierten Polyisocyanat-Adduktes auf die Eigenschaften der PUR-Pulverbeschichtung wurde sehr eindrucksvoll am Powder Coatings Symposium in London am 30.10.1987 (R. Gras; H. Schnurbusch) aufgezeigt.

Der dort vorgestellte PUR-Pulverhärter mit seinen überlegenen Eigenschaften hat eine NCO-Funktionalität von ca. 3,3 und einen Schmelzbereich von 145-148 °C. Ein solcher Härter läßt sich, wie bereits beschrieben, wegen des hohen Schmelzpunktes im technischen Maßstab nicht oder nur mit größten Schwierigkeiten nach einem einfachen Eintopfverfahren herstellen. Dies ist mit großer Wahrscheinlichkeit der Grund dafür, daß dieser Härter, der es ermöglicht, Pulverbeschichtungen mit hervorragender Lösungsmittelbeständigkeit herzustellen, noch nicht auf dem Markt ist.

Aufgabe der vorliegenden Erfindung war es somit, blockierte höherfunktionelle Polyisocyanataddukte guter Chemikalienbeständigkeit mit einem Schmelzpunkt < 120 °C, bevorzugt 80-110 °C, nach einem einfachen, technisch realisierbaren Verfahren bereitzustellen.

Überraschenderweise konnte gefunden werden, daß solche Verbindungen mit niedrigem Schmelzpunkt und guter Lösungsmittelbeständigkeit dann erhalten werden, wenn das zur Blockierung eingesetzte Diisocyanataddukt mit dem Blockierungsmittel, speziell ε-Caprolactam, nicht im NCO:(monofunktionelles) Blockierungsmittel-Äquivalenzverhältnis = 1 : 1, sondern im Verhältnis von 1 : 1,1-2 umgesetzt wird. Es war nicht vorhersehbar und besonders überraschend, daß der Blockierungsmittelüberschuß, der ja z. T. nach dem Härten im Lack verbleibt, sich nicht negativ auf die Lackoberfläche auswirkt. Man hätte gerade das Gegenteil erwartet.

Gegenstand der vorliegenden Erfindung sind somit blockierte, höherfunktionelle Polyisocyanataddukte mit einem Schmelzpunkt < 120 °C, bevorzugt 80-110 °C, welche dadurch gekennzeichnet sind, daß das blockierte Polyisocyanataddukt mit einer Funktionalität > 2 pro blockierte NCO-Gruppe 1,1-2 mol Blockierungsmittel enthält.

Die erfindungsgemäßen Verbindungen zeichnen sich durch einen Gehalt an blockiertem NCO von 6-15 % und einen Gehalt an (freiem) ε-Caprolactamvon 2-30 % aus. Neben den blockierten NCO-Gruppen enthalten die erfindungsgemäßen Verbindungen Isocyanurat oder Biuret- oder Urethan- und/oder Harnstoffgruppen.

Ein weiterer Gegenstand der vorliegenden Erfindung ist ein Verfahren zur Herstellung der erfindungsgemäßen Verbindungen, welche dadurch gekennzeichnet sind, daß das Polyisocyanataddukt mit dem monofunktionellen Blockierungsmittel im NCO:(monofunktionelles) Blockierungsmittel-Äquivalenzverhältnis von 1 : 1,1-2 zur Reaktion gebracht wird.

Die Reaktion erfolgt so, daß zu dem bei 130-160 °C geschmolzenen Diisocyanataddukt das Blockierungsmittel portionsweise in dem angegebenen Verhältnis zugegeben wird. In dem Maße, wie die Reaktion des Diisocyanat-Addukts mit dem Blockierungsmittel erfolgt, steigt die Viskosität des Reaktionsgemisches, die das Maximum dann erreicht hat, wenn gerade pro NCO-Äquivalent des Diisocyanataddukts 1 mol Blockierungsmittel reagiert hat. In manchen Fällen muß dann zur guten Durchmischung das Reaktionsgemisch auf ca. 180 °C gesteigert werden. Dies ist aber nur kurzzeitig notwendig, da bei weiterer Zugabe des Blockierungsmittels der Schmelzpunkt des Reaktionsgemisches sehr schnell fällt.

Für das erfindungsgemäße Verfahren eignen sich folgende Diisocyanat-Addukte:

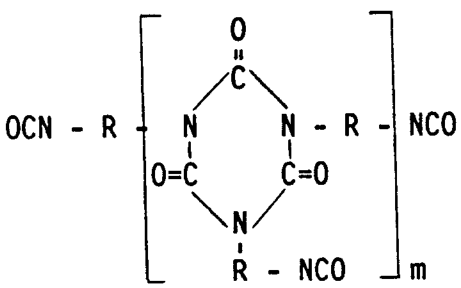

(A)

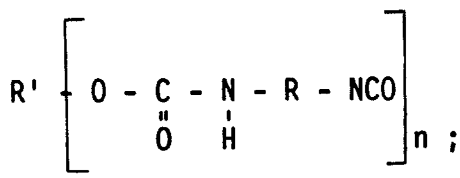

(B)

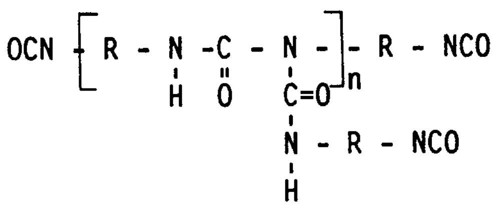

(C)

wobei R: 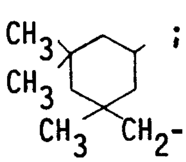 ; 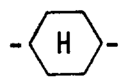 ; 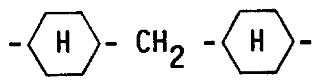

und m = 1-4; n = 3,4 und R' = KW-Rest eines Polyols ist.

Die Isocyanataddukte A), B) und C) werden nach bekannten Verfahren hergestellt. Die Isocyanuratgruppen enthaltenden Isocyanataddukte A) werden entsprechend der Lehre der DE-PSS 26 44 684 und 29 16 201 hergestellt. Man geht dabei so vor, daß das Diisocyanat mit einem Katalysator partiell umgesetzt (ca. 40 % Umsatz) wird, und dann das nicht umgesetzte Diisocyanat durch Dünnschichtdestillation entfernt. Diese so hergestellten Isocyanurate können auch im Gemisch mit bis zu ca. 25 Gew.-% monomerem Diisocyanat zur Blockierung eingesetzt werden. In solchen Fällen wird das Diisocyanat bis zu dem gewünschten Umsatz trimerisiert und dann ohne vorherige Monomerenabtrennung mit dem Blockierungsmittel in der beschriebenen Weise zur Reaktion gebracht. Analog verfährt man bei der Blockierung der Urethangruppen enthaltenden Isocyanataddukte B). Die monomerfreien Addukte B) werden so hergestellt, daß das Diisocyanat - also z. B. Isophorondiisocyanat, Cyclohexan-1.4-diisocyanat, Di-(4-isocyanatocyclohexyl)-methan - mit dem Polyol, wie z. B. Trimethylolpropan, Glycerin, Pentaerythrit, Tris(hydroxyethyl)-isocyanurat im Molverhältnis Diisocyanat : Polyol 10-20:1 umgesetzt wird und anschließend das nicht umgesetzte Diisocyanat durch Dünnschichtdestillation entfernt wird.

Setzt man das Urethangruppen enthaltende Isocyanataddukt B) mit bis zu 25 Gew.-% monomerem Diisocyanat zur Blockierung ein, so wird das Diisocyanat mit dem Polyol so umgesetzt, daß pro OH-Gruppe des Polyols 2-2,5 NCO-Äquivalente des Diisocyanats zur Reaktion kommen. Das Reaktionsprodukt wird

dann ohne vorherige Monomerenabtrennung in der beschriebenen Weise blockiert. Die Biuretgruppen enthaltenden Isocyanataddukte C) werden gemäß der Lehre der DE-OS 23 08 015 hergestellt. Das Diisocyanat wird dabei mit $H_2O$ im Molverhältnis von 10-20:1 umgesetzt; das nicht umgesetzte Diisocyanat wird dann wiederum durch Dünnschichtdestillation entfernt. Wird das Biuretgruppen enthaltende Isocyanataddukt C) im Gemisch mit monomerem Diisocyanat zur Blockierung eingesetzt, wird das Diisocyanat mit $H_2O$ im Molverhältnis 3-4:1 umgesetzt und nach erfolgter Umsetzung ohne vorherige Monomerenabtrennung durch Dünnschichtdestillation mit dem Blockierungsmittel in der beschriebenen Weise zur Reaktion gebracht.

Als Blockierungsmittel wird in dem erfindungsgemäßen Verfahren bevorzugt ε-Caprolactam eingesetzt, aber auch Acetonoxim oder Methylethylketonoxim oder 2-Phenyl-imidazolin können zur Blockierung eingesetzt werden.

Die erfindungsgemäßen Verbindungen eignen sich zur Herstellung von 1-K-PUR-Lacken, in besonderem Maße von PUR-Pulverlacken.

Als Reaktionspartner für PUR-Pulverlacke kommen Verbindungen infrage, die solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapto-, Amino-, Urethan- und (Thio)-Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und -ether, teilweise verseifte Homo- und Copolymerisate von Vinylestern, insbesondere aber Polyester und Acrylatharze.

Die erfindungsgemäß eingesetzten hydroxylgruppenhaltigen Polyester haben eine OH-Funktionalität von 2,5 bis 5, bevorzugt von 3 bis 4,2, ein mittleres Molekulargewicht von 1 800 bis 5 000, bevorzugt von 2 300 bis 4 500, eine OH-Zahl von 25 bis 120 mg KOH/g, bevorzugt von 30 bis 90 mg KOH/g, eine Viskosität von < 80 000 mPa•s, bevorzugt von < 60 000 mPa•s, besonders bevorzugt von < 40 000 mPa•s bei 160 °C und einem Schmelzpunkt von ≧ 70 °C bis ≦ 120 °C, bevorzugt von ≧ 75 °C bis ≦ 100 °C.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt:

Bernstein-, Adipin-, Kork-, Azelain-, Sebacin-, Phthal-, Terephthal-, Isophthal-, Trimellith-, Pyromellith-, Tetrahydrophthal-, Hexahydrophthal-, Hexahydroterephthal-, Di- und Tetrachlorphthal-, Endomethylentetrahydrophthal-,Glutar-, Malein- und Fumarsäure bzw. - soweit zugänglich - deren Anhydride, Terephthalsäuredimethylester, Terephthalsäure-bis-glykolester, weiterhin cyclische Monocarbonsäuren wie Benzoesäure, p-tert.-Butylbenzoesäure oder Hexahydrobenzoesäure.

Als mehrwertige Alkohole kommen z. B. Ethylenglykol, Propylenglykol-1.2 und -1.3, Butylenglykol-1.4 und -2.3, Di-β-hydroxyethyl-butandiol, Hexandiol-1.6, Octandiol-1.8, Neopentylglykol, Cyclohexandiol, Bis-(1.4-hydroxymethyl)-cyclohexan, 2.2-Bis-(4-hydroxycyclohexyl)-propan, 2.2-Bis-{4-(β-hydroxyethoxy)-phenyl}-propan, 2-Methyl-propandiol-1.3, 3-Methyl-pentandiol-1.5, 2.2.4(2.4.4)-Trimethylhexandiol-1.6, Glycerin, Trimethylolpropan, Trimethylolethan, Hexantriol-1.2.6, Butantriol-1.2.4, Tris(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester infrage.

Auch Mono- und Polyester aus Lactonen, z. B. ε-Caprolacton oder Hydroxycarbonsäuren, z. B. Hydroxypivalinsäure, Ω-Hydroxydecansäure, β-Hydroxycapronsäure, Thioglykolsäure können eingesetzt werden. Polyester aus den obengenannten Polycarbonsäuren bzw. deren Derivaten und Polyphenolen, wie Hydrochinon, Bisphenol A, 4.4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1.6 und anderen Polyolen durch übliche Kondensationsreaktionen, z. B. mit Phosgen oder Diethyl- bzw. Diphenylcarbonat, oder aus cyclischen Carbonaten wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, β-Chlorethan-, Benzol- oder Styrolphosphorsäure-, -phosphorsäurechlorid oder -phosphorsäureester und Polyalkoholen oder Polyphenolen der obengenannten Art; Polyester der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxan-dihydriden an Olefine, wie Allylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-OS 24 10 513 beschrieben sind.

Beispiele für Glycidylverbindungen, die verwendet werden können, sind Ester des 2.3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid und Glycidylether, wie Octylglycidylether.

Als Dicarbonsäuren können bei diesem Verfahren sämtliche unter II im folgenden aufgeführten Polycarbonsäuren verwendet werden. Monocarbonsäuren, welche beispielsweise unter III aufgeführt sind, können ebenfalls eingesetzt werden.

Bevorzugte Komponenten sind auch monomere Ester, z. B. Dicarbonsäure-bis-(hydroxyalkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:

I. Alkohole mit 2 bis 24, vorzugsweise 2 bis 10 C-Atomen, und 2 bis 6 an nichtaromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit.

II. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäure, Trimellithsäure, Pyromellithsäure, Azelainsäure;

III. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosölfettsäure, Sojaölfettsäure, Ricinenfettsäure, hydrierte und isomerisierte Fettsäuren, wie "Konjuvandol"-fettsäure sowie deren Gemische, wobei die Fettsäuren auch als Glyceride einsetzbar sind und unter Umesterung und/oder Dehydratisierung umgesetzt werden können;

IV. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1-5, 21-23, 40-44, Georg Thieme Verlag, Stuttgart, 1963 oder bei C. R. Martens, Alkyd Resins, 51-59, Reinhold Plastics Appl. Series, Reinhold Publishing Comp., New York, 1961, beschrieben ist.

Bevorzugte Acrylatharze, welche als OH-Komponenten verwendet werden können, sind Homo- oder Copolymerisate, wobei z. B. folgende Monomere als Ausgangsprodukte gewählt werden können:

Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure- und Methacrylsäurealkylester mit 1 bis 18, vorzugsweise 1 bis 8 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid.

Besonders bevorzugte Acrylharze sind Copolymere aus

a. 0 bis 50 Gew.-% Monoester der Acryl- oder Methacrylsäure mit zwei- oder mehrwertigen Alkoholen, wie Butandiol-(1.4)-monoacrylat, Hydroxypropyl(meth)acrylat; ferner Vinylglykol, Vinylthioethanol, Allylalkohol, Butandiol-1.4-monovinylether;

b. 5 bis 95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butylacrylat oder 2-Ethylhexylacrylat;

c. 0 bis 50 Gew.-% aromatische Vinylverbindungen, wie Styrol, Methylstyrol oder Vinyltoluol;

d. 0 bis 20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Glycidyl(meth)acrylat, wobei der Anteil der Gruppe a. und/oder d. mindestens 5 Gew.-%. beträgt.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3.3-Bis-(chlor-methyl)-oxacyclobutan, Tetrahydrofuran, Styroloxid, dem Bis-(2.5)-epoxypropylether des Diphenylolpropans oder Epichlorhydrins mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1.3) oder -(1.2), Pentamethylenglykol, Hexandiol, Decamethylenglykol, Trimethylolpropan, 4.4'-Dihydroxydiphenylpropan, Anilin, Ammoniak, Ethanolamin, Ethylendiamin, Di($\beta$-hydroxyethyl)-anilin, Hydrazin, sowie auch hydroxyalkylierten Phenolen, wie z. B. Di($\beta$-hydroxyethyl)-resorcin, hergestellt werden.

Ebenso können hydroxylgruppenhaltige Polyurethane und/oder Polyharnstoffe eingesetzt werden.

Als Polyhydroxylverbindungen können selbstverständlich Gemische mehrerer Stoffe eingesetzt werden.

Das Mischungsverhältnis von hydroxylgruppenhaltigen Polymeren und Isocyanatkomponente wird in der Regel so gewählt, daß auf eine OH-Gruppe 0,6 bis 1,2, bevorzugt 0,8 bis 1,1, ganz besonders bevorzugt 1,0 NCO-Gruppen kommen.

Die Isocyanatkomponente wird für die Herstellung in PUR-Pulverlacken mit dem geeigneten hydroxylgruppenhaltigen Polymeren und gegebenenfalls Katalysatoren, Pigmenten, Füllstoffen und Verlaufmitteln, z. B. Siliconöl, flüssigen Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 10 Minuten auf eine Temperatur von 160 bis 220 °C, vorzugsweise 30 bis 10 Minuten, bei 180 bis 210 °C erhitzt.

**A Herstellung der erfindungsgemäßen Verbindungen**

1. Allgemeine Herstellungsvorschrift

Zu dem geschmolzenen Diisocyanataddukt (130-160 °C) wird das Blockierungsmitel portionsweise zugegeben. In dem Maße, wie die Reaktion des Diisocyanataddukts mit dem Blockierungsmittel erfolgt, steigt die Viskosität des Reaktionsgemisches, die das Maximum dann erreicht hat, wenn gerade pro NCO-Äquivalent des Diisocyanataddukts 1 mol Blockierungsmittel reagiert hat. In manchen Fällen muß dann zur guten Durchmischung das Reaktionsgemisch auf ca. 180 °C erhitzt werden. Dies ist aber nur kurzzeitig notwendig, da bei weiterer Zugabe des Blockierungsmittels der Schmelzpunkt des Reaktionsgemisches sehr schnell fällt. Nach Beendigung der Blockierungsmittelzugabe wird zur Vervollständigung der Reaktion noch ca. 1 h bei 140 °C weiter erhitzt.

Beispiel 1

242 Gew.-T. des trimeren Isophorondiisocyanats (IPDI-T 1890; Verkaufsprodukt der Hüls AG) werden mit 169,5 Gew.-T. $\epsilon$-Caprolactam entsprechend der allgemeinen Herstellungsvorschrift umgesetzt.
Das Reaktionsprodukt hatte einen Schmelzbereich von 85-95 °C und einen blockierten NCO-Gehalt von 9,5 %, freie NCO-Gruppen waren nicht mehr nachweisbar.

Beispiel 2

242 Gew.-T. des trimeren Isophorondiisocyanats wurden analog zum Beispiel 1 mit 141,25 Gew.-T. $\epsilon$-Caprolactam umgesetzt.
Das Reaktionsprodukt hatte einen Schmelzbereich von 116-120 °C und einen blockierten NCO-Gehalt von 10,4 %; freie NCO-Gruppen waren nicht mehr nachweisbar.

Beispiel 3

IPDI wurde gemäß der Lehre der DE-PS 27 12 931 bis zu einem NCO-Gehalt von 20,9 % trimerisiert.
201 Gew.-T. dieses trimerisierten IPDI wurden analog zum Beispiel 1 mit 141,25 Gew.-T. $\epsilon$-Caprolactam

umgesetzt. Das Reaktionsprodukt hatte einen Schmelzbereich von 92-100 °C und einen blockierten NCO-Gehalt von 12 %.

Beispiel 4

IPDI wurde gemäß der Lehre der DE-PS 27 12 931 bis zu einem NCO-Gehalt von 22,9 % trimerisiert. 183,4 Gew.-T. dieses trimerisierten IPDI wurden analog zum Beispiel 1 mit 141,25 Gew.-T. ε-Caprolactam umgesetzt.
Das Reaktionsprodukt hatte einen Schmelzbereich von 79-84 °C und einen blockierten NCO-Gehalt von 12,6 %; freie NCO-Gruppen waren nicht mehr nachweisbar.

Beispiel 5

Zu 666 Gew.-T. IPDI wurden bei 80 °C 134 Gew.-T. Trimethylolpropan portionsweise gegeben und so lange bei 80 °C weiter erhitzt, bis der NCO-Gehalt auf 15,7 % gefallen ist.
Danach wurden 508,5 Gew.-T. ε-Caprolactam entsprechend der allgemeinen Herstellungsvorschrift umgesetzt.
Das Reaktionsprodukt hatte einen Schmelzbereich von 83-90 °C und einen blockierten NCO-Gehalt von 9,6 %; freie NCO-Gruppen konnten nicht nachgewiesen werden.

Beispiel 6

242 Gew.-T. trimeres IPDI wurden mit 108,75 Gew.-T. Methylethylketoxim entsprechend Beispiel 1 umgesetzt.
Das Reaktionsprodukt hatte einen Schmelzbereich von 101-116 °C; der blockierte NCO-Gehalt betrug 12,5 %. Freie NCO-Gruppen konnten nicht mehr nachgewiesen werden.

Beispiel 7

242 Gew.-T. trimeres IPDI wurden mit 182,5 Gew.-T. 2-Phenylimidazolin entsprechend der allgemeinen Herstellungsvorschrift umgesetzt.
Das Reaktionsprodukt hatte einen Schmelzbereich von 119-127 °C und einen blockierten NCO-Gehalt von 9,6 %; freies NCO konnte nicht mehr nachgewiesen werden.

**B Polyolkomponente**

Beispiel 1

In den Anwendungsbeispielen wurde als Polyolkomponente ein hydroxylgruppenhaltiger Polyester der Fa. Hoechst eingesetzt. Der Polyester ist gemäß dem Hersteller durch folgende Kennzeichen charakterisiert:

| | |
|---|---|
| OH-Zahl: | 55-60 mg KOH/g |
| Säurezahl: | 3-5 mg KOH/g |
| Schmelzbereich: | 70-75 °C |
| Glasumwandlungstemperatur: | 50 °C |
| Viskosität bei 160 °C: | 28 000 mPa•s |

Beispiel 2

Die Ausgangskomponenten, 10 mol Terephthalsäure, 10 mol Dimethylterephthalat, 6,25 mol Hexandiol-1,6, 10,5 mol Neopentylglykol, 2 mol 1.4-Dimethylolcyclohexan und 2,9 mol Trimethylolpropan werden in einen Reaktor gegeben und mit Hilfe eines Ölbades erhitzt. Nachdem die Stoffe zum größten Teil aufgeschmolzen sind, werden bei einer Temperatur von 160 °C 0,05 Gew.-% Di-n-butylzinnoxid als Katalysator zugesetzt. Die erste Methanolabspaltung tritt bei einer Temperatur von ca. 170 °C ein. Innerhalb von 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von

Vakuum (1,33 mbar) innerhalb 30 bis 45 Minuten weitgehend von flüchtigen Anteilen befreit. Während der gesamten Reaktionszeit wird das Sumpfprodukt gerührt und ein schwacher $N_2$-Strom durch das Reaktionsgemisch geleitet.

Der hydroxylgruppenhaltige Polyester weist folgende Kenndaten auf:

| | |
|---|---|
| OH-Zahl: | 55-60 mg KOH/g |
| Säurezahl: | 3-4 mg KOH/g |
| Schmelzbereich: | 73-78 °C |
| Glasumwandlungstemperatur: | ≈ 50 °C |
| Viskosität bei 160 °C: | 25 000 mPa•s |

## C Polyurethan-Pulverlacke

Allgemeine Herstellungsvorschrift

Die gemahlenen Produkte, Vernetzer, Polyester, Verlaufmittel, ggf. Katalysator-Masterbatch, werden gegebenenfalls mit dem Weißpigment und gegebenenfalls Füllstoffen und Benzoin in einem Kollergang innig vermischt und anschließend im Extruder bei 90 bis 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 kV auf entfettete, gegebenenfalls vorbehandelte Eisenbleche appliziert und in einem Umlufttrockenschrank bei Temperaturen zwischen 180 und 200 °C eingebrannt.

Verlaufmittel-Masterbatch

Es werden 10 Gew.-% des Verlaufmittels - ein handelsübliches Copolymeres von Butylacrylat und 2-Ethylhexylacrylat - in dem entsprechenden Polyester in der Schmelze homogenisiert und nach dem Erstarren zerkleinert.

Katalysator-Masterbatch

Es werden 5 Gew.-% des Katalysators, hier Di-n-butylzinndilaurat in dem entsprechenden Polyester in der Schmelze homogenisiert und nach dem Erstarren zerkleinert.

Die Abkürzungen in den folgenden Tabellen bedeuten:

| | |
|---|---|
| SD | = Schichtdicke in µm |
| HK | = Pendeldämpfung n. König in sec (DIN 53 157) |
| HB | = Härte nach Buchholz (DIN 53 153) |
| ET | = Tiefung nach Erichsen in mm (DIN 53 156) |
| GS | = Gitterschnittprüfung (DIN 53 151) |
| GG 60 °∡ | = Messung des Glanzes nach Gardner (ASTM-D 523) |
| Imp. rev. | = Impact reverse in g • m |

Beispiel 1

Nach dem beschriebenen Verfahren wurde der Pulverlack mit folgender Rezeptur hergestellt, appliziert und zwischen 180 °C und 200 °C eingebrannt.

353,7 Gew.-T. Polyester gemäß Beispiel B 1
191,3 Gew.-T. Vernetzer gemäß Beispiel A 1
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °) |
| 15 / 200 | 50-55 | 191 | 125 | 9,0-9,6 | 0 | > 944,6 | 85 |
| 20 / 200 | 50-60 | 185 | 125 | 9,4->10 | 0 | > 944,6 | 85 |
| 25 / 200 | 50-55 | 186 | 125 | > 10 | 0 | > 944,6 | 85 |
| 25 / 180 | 55-50 | 193 | 125 | > 10 | 0 | 806,4 | 86 |
| 30 / 180 | 50 | 195 | 125 | > 10 | 0 | > 944,6 | 86 |

Beispiel 2

Nach dem beschriebenen Verfahren wurde der Pulverlack mit folgender Rezeptur hergestellt, appliziert und zwischen 180 °C und 200 °C eingebrannt.

365,2 Gew.-T. Polyester gemäß Beispiel B 1
179,8 Gew.-T. Vernetzer gemäß Beispiel A 2
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °) |
| 15 / 200 | 50-55 | 184 | 125 | > 10 | 0 | > 944,6 | 84 |
| 20 / 200 | 50 | 186 | 125 | > 10 | 0 | > 944,6 | 84 |
| 25 / 200 | 50-55 | 190 | 125 | > 10 | 0 | > 944,6 | 84 |
| 25 / 180 | 50-60 | 196 | 125 | 9,2->10 | 0 | 576,0 | 86 |
| 30 / 180 | 50-60 | 200 | 125 | 9,8->10 | 0 | 691,2 | 86 |

Beispiel 3

Nach dem beschriebenen Verfahren wurde der Pulverlack mit folgender Rezeptur hergestellt, appliziert und zwischen 180 °C und 200 °C eingebrannt.

391,8 Gew.-T. Polyester gemäß Beispiel B 1
153,2 Gew.-T. Vernetzer gemäß Beispiel A 2
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °∢ |
| 15 / 200 | 65-80 | 194 | 125 | 9,9->10 | 0 | 806,4 | 85 |
| 20 / 200 | 70-80 | 193 | 111 | > 10 | 0 | 806,4 | 85 |
| 25 / 200 | 60-70 | 188 | 111 | > 10 | 0 | > 944,6 | 85 |
| 25 / 180 | 70-80 | 196 | 111 | 6,9-8,5 | 0 | 115,2 | 85 |
| 30 / 180 | 60-70 | 184 | 111 | > 10 | 0 | 691,2 | 85 |

Beispiel 4

Nach dem beschriebenen Verfahren wurde der Pulverlack mit folgender Rezeptur hergestellt, appliziert und zwischen 180 °C und 200 °C eingebrannt.

353,0 Gew.-T. Polyester gemäß Beispiel B 2
192,0 Gew.-T. Vernetzer gemäß Beispiel A 2
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °} |
| 15 / 200 | 60 | 190 | 111 | 9,5->10 | 0 | > 944,6 | 87 |
| 20 / 200 | 50-60 | 186 | 111 | > 10 | 0 | > 944,6 | 86 |
| 25 / 200 | 50-60 | 187 | 125 | > 10 | 0 | > 944,6 | 87 |
| 25 / 180 | 50-65 | 194 | 111 | > 10 | 0 | 806,4 | 86 |
| 30 / 180 | 55-70 | 192 | 111 | > 10 | 0 | > 944,6 | 86 |

Beispiel 5

Nach dem beschriebenen Verfahren wurde der Pulverlack mit folgender Rezeptur hergestellt, appliziert und zwischen 180 °C und 200 °C eingebrannt.
382,6 Gew.-T. Polyester gemäß Beispiel B 2
162,4 Gew.-T. Vernetzer gemäß Beispiel A 3
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °} |
| 15 / 200 | 50-55 | 192 | 125 | 9,3->10 | 0 | 806,4 | 84 |
| 20 / 200 | 60-70 | 193 | 125 | > 10 | 0 | > 944,6 | 85 |
| 25 / 200 | 60-75 | 194 | 125 | > 10 | 0 | > 944,6 | 85 |
| 25 / 180 | 50 | 190 | 125 | > 10 | 0 | 691,2 | 85 |
| 30 / 180 | 60-70 | 202 | 125 | > 10 | 0 | > 944,6 | 85 |

Beispiel 6

Nach dem beschriebenen Verfahren wurde der Pulverlack mit folgender Rezeptur hergestellt, appliziert und zwischen 180 °C und 200 °C eingebrannt.

353,0 Gew.-T. Polyester gemäß Beispiel B 1
162,0 Gew.-T. Vernetzer gemäß Beispiel A 3
400,0 Gew.-T. Weißpigment ($TiO_2$)
50,0 Gew.-T. Verlaufmittel-Masterbatch
5,0 Gew.-T. Benzoin
30,0 Gew.-T. Katalysator-Masterbatch

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °∢ |
| 15 / 200 | 50-60 | 188 | 125 | > 10 | 0 | > 944,6 | 84 |
| 20 / 200 | 50-60 | 187 | 125 | > 10 | 0 | > 944,6 | 84 |
| 25 / 200 | 60-75 | 192 | 125 | > 10 | 0 | > 944,6 | 84 |
| 25 / 180 | 60-70 | 194 | 125 | > 10 | 0 | > 944,6 | 85 |
| 30 / 180 | 60 | 199 | 125 | > 10 | 0 | > 944,6 | 85 |

Beispiel 7

Nach dem beschriebenen Verfahren wurde der Pulverlack mit folgender Rezeptur hergestellt, appliziert und zwischen 180 °C und 200 °C eingebrannt.

388,2 Gew.-T. Polyester gemäß Beispiel B 1
156,8 Gew.-T. Vernetzer gemäß Beispiel A 4
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °≮ |
| 15 / 200 | 75-80 | 196 | 125 | > 10 | 0 | > 944,6 | 84 |
| 20 / 200 | 60-70 | 189 | 125 | > 10 | 0 | > 944,6 | 85 |
| 25 / 200 | 70-80 | 194 | 125 | > 10 | 0 | > 944,6 | 85 |
| 25 / 180 | 70-80 | 195 | 125 | > 10 | 0 | > 944,6 | 85 |
| 30 / 180 | 60-70 | 196 | 125 | > 10 | 0 | > 944,6 | 85 |

Beispiel 8

Nach dem beschriebenen Verfahren wurde der Pulverlack mit folgender Rezeptur hergestellt, appliziert und zwischen 180 °C und 200 °C eingebrannt.

377,0 Gew.-T. Polyester gemäß Beispiel B 2
168,0 Gew.-T. Vernetzer gemäß Beispiel A 4
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °≮ |
| 15 / 200 | 60-70 | 190 | 111 | > 10 | 0 | > 944,6 | 86 |
| 20 / 200 | 60-75 | 187 | 125 | > 10 | 0 | > 944,6 | 86 |
| 25 / 200 | 55-70 | 189 | 125 | > 10 | 0 | > 944,6 | 87 |
| 25 / 180 | 60-65 | 191 | 125 | > 10 | 0 | > 944,6 | 86 |
| 30 / 180 | 55-65 | 193 | 111 | > 10 | 0 | > 944,6 | 86 |

Beispiel 9

Nach dem beschriebenen Verfahren wurde der Pulverlack mit folgender Rezeptur hergestellt, appliziert und zwischen 180 °C und 200 °C eingebrannt.

412,5 Gew.-T. Polyester gemäß Beispiel B 1
132,5 Gew.-T. Vernetzer gemäß Beispiel A 4
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °∢ |
| 15 / 200 | 50-60 | 187 | 125 | > 10 | 0 | > 944,6 | 86 |
| 20 / 200 | 60-70 | 185 | 125 | > 10 | 0 | > 944,6 | 86 |
| 25 / 200 | 50-60 | 186 | 125 | > 10 | 0 | > 944,6 | 86 |
| 25 / 180 | 70 | 193 | 125 | > 10 | 0 | 806,4 | 87 |
| 30 / 180 | 50-60 | 190 | 125 | > 10 | 0 | > 944,6 | 86 |

Beispiel 10

Nach dem beschriebenen Verfahren wurde der Pulverlack mit folgender Rezeptur hergestellt, appliziert und zwischen 180 °C und 200 °C eingebrannt.

355,0 Gew.-T. Polyester gemäß Beispiel B 1
190,0 Gew.-T. Vernetzer gemäß Beispiel A 5
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °⊁ |
| 15 / 200 | 50-60 | 188 | 125 | > 10 | 0 | > 944,6 | 85 |
| 20 / 200 | 60-65 | 183 | 125 | > 10 | 0 | > 944,6 | 85 |
| 25 / 200 | 70 | 188 | 125 | > 10 | 0 | > 944,6 | 85 |
| 25 / 180 | 50 | 187 | 125 | > 10 | 0 | > 944,6 | 88 |
| 30 / 180 | 50-60 | 190 | 125 | > 10 | 0 | > 944,6 | 88 |

Beispiel 11

Nach dem beschriebenen Verfahren wurde der Pulverlack mit folgender Rezeptur hergestellt, appliziert und zwischen 180 °C und 200 °C eingebrannt.
382,5 Gew.-T. Polyester gemäß Beispiel B 1
162,5 Gew.-T. Vernetzer gemäß Beispiel A 5
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °⊁ |
| 15 / 200 | 50-60 | 189 | 125 | > 10 | 0 | > 944,6 | 86 |
| 20 / 200 | 60-70 | 193 | 125 | > 10 | 0 | > 944,6 | 86 |
| 25 / 200 | 50-60 | 189 | 125 | > 10 | 0 | > 944,6 | 86 |
| 25 / 180 | 50-60 | 192 | 125 | > 10 | 0 | > 944,6 | 86 |
| 30 / 180 | 60-70 | 194 | 125 | > 10 | 0 | > 944,6 | 87 |

Beispiel 12

Nach dem beschriebenen Verfahren wurde der Pulverlack mit folgender Rezeptur hergestellt, appliziert und zwischen 180 °C und 200 °C eingebrannt.

342,5 Gew.-T. Polyester gemäß Beispiel B 2
202,5 Gew.-T. Vernetzer gemäß Beispiel A 5
400,0 Gew.-T. Weißpigment ($TiO_2$)
50,0 Gew.-T. Verlaufmittel-Masterbatch
5,0 Gew.-T. Benzoin

| Einbrenn-bedingungen | Mechanische Kenndaten | | | | | | |
|---|---|---|---|---|---|---|---|
| Zeit / Temp. min °C | SD | HK | HB | ET | GS | Imp. rev. | GG 60 °∢ |
| 15 / 200 | 60-70 | 193 | 125 | > 10 | 0 | 806,4 | 86 |
| 20 / 200 | 65-75 | 187 | 125 | > 10 | 0 | > 944,6 | 86 |
| 25 / 200 | 60-70 | 191 | 125 | > 10 | 0 | > 944,6 | 86 |
| 25 / 180 | 50-60 | 190 | 125 | > 10 | 0 | 806,4 | 85 |
| 30 / 180 | 60-70 | 195 | 125 | > 10 | 0 | > 944,6 | 87 |

**Patentansprüche**

1. Blockierte höherfunktionelle Polyisocyanataddukte mit einem Schmelzpunkt < 120 °C, bevorzugt 80 - 110 °C,
dadurch gekennzeichnet,
daß das blockierte Polyisocyanataddukt mit einer Funktionalität > 2 pro blockierte NCO-Gruppe 1,1-2 mol Blockierungsmittel enthält.

2. Blockierte Polyisocyanataddukte gemäß Anspruch 1,
dadurch gekennzeichnet,
daß zur Blockierung folgende Isocyanataddukte:

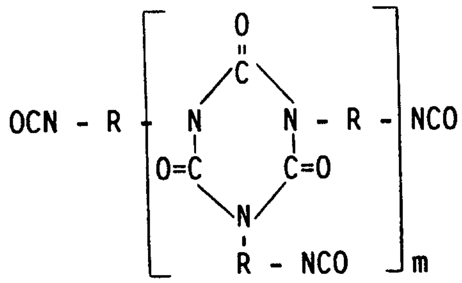

(A)

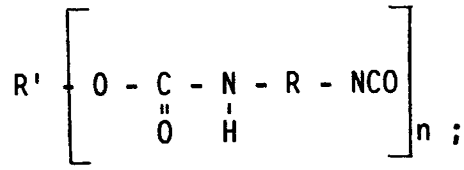

(B)

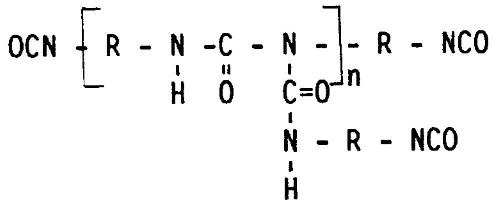

(C)

wobei R: 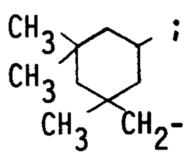 ; 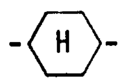 ; 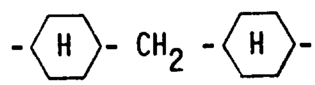

und m = 1-4; n = 3,4 und R' = KW-Rest eines mehrwertigen Alkohols ist, gegebenenfalls im Gemisch mit bis zu ca. 25 Gew.-% monomerem Diisocyanat eingesetzt werden.

**3.** Blockierte Polyisocyanataddukte gemäß Anspruch 1,
dadurch gekennzeichnet,
daß das Blockierungsmittel ε-Caprolactam, Acetonoxim, Methylethylketonoxim oder 2-Phenylimidazolin ist.

**4.** Verfahren zur Herstellung der blockierten Polyisocyanate gemäß Anspruch 1,
dadurch gekennzeichnet,
daß die Polyisocyanate A), B), C) mit dem monofunktionellen Blockierungsmittel so umgesetzt werden, daß pro NCO-Äquivalent 1,1-2 mol Blockierungsmittel zur Reaktion kommen.

**5.** Verwendung der erfindungsgemäßen Verbindungen zur Herstellung von PUR-Pulverlacken.

Europäisches Patentamt

# EUROPÄISCHER RECHERCHENBERICHT

Nummer der Anmeldung

EP 92 11 4953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-2 213 961 (NIPPON ESTER)<br>* Seite 7, Zeile 17 - Zeile 32 *<br>* Seite 23 - Seite 25; Ansprüche 1-4 *<br>--- | 1 | C08G18/80<br>C08G18/79 |
| X | EP-A-0 182 996 (AMERICAN CYANAMID)<br>* Seite 10, Zeile 29 - Seite 11, Zeile 28; Ansprüche 1-7; Beispiel 3 *<br>--- | 1 | |
| A | DE-A-2 166 423 (VEBA-CHEMIE)<br>* Seite 2, Zeile 7 - Seite 3, Zeile 32; Anspruch 1 *<br>--- | 1-5 | |
| A | US-A-3 245 961 (FETSCHER ET AL)<br>* Spalte 3, Zeile 5 - Spalte 5, Zeile 67 *<br>--- | 1-5 | |
| A | US-A-3 748 315 (WOOSTER ET AL)<br>* Spalte 2, Zeile 13 - Zeile 46; Anspruch 1 *<br>--- | 1-5 | |
| A<br>D | EP-A-0 000 798 (VEBA-CHEMIE)<br>& DE-A-2 735 497<br>----- | | RECHERCHIERTE SACHGEBIETE (Int. Cl.5 )<br>C08G |

Der vorliegende Recherchenbericht wurde für alle Patentansprüche erstellt

| Recherchenort | Abschlußdatum der Recherche | Prüfer |
|---|---|---|
| DEN HAAG | 10 FEBRUAR 1993 | BOURGONJE A.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)